(19) Europäisches Patentamt
European Patent Office
Office européen des brevets

(11) **EP 3 411 968 B1**

(12) **FASCICULE DE BREVET EUROPEEN**

(45) Date de publication et mention
de la délivrance du brevet:
**30.03.2022 Bulletin 2022/13**

(21) Numéro de dépôt: **17702131.8**

(22) Date de dépôt: **02.02.2017**

(51) Classification Internationale des Brevets (IPC):
**H04H 20/06** (2008.01)    **H04H 60/07** (2008.01)
**H04H 20/67** (2008.01)    **H04H 20/72** (2008.01)
**H04H 60/40** (2008.01)

(52) Classification Coopérative des Brevets (CPC):
**H04H 60/07; H04H 20/06; H04H 20/67;**
**H04H 20/72; H04H 60/40**

(86) Numéro de dépôt international:
**PCT/EP2017/052238**

(87) Numéro de publication internationale:
**WO 2017/134157 (10.08.2017 Gazette 2017/32)**

(54) **PROCÉDÉ ET ÉQUIPEMENT DE GÉNÉRATION D'UN FLUX GLOBAL D'ORIGINE, RESPECTIVEMENT UN FLUX GLOBAL MODIFIÉ, DESTINÉ À ÊTRE DIFFUSÉ PAR UN SITE DE DIFFUSION, RESPECTIVEMENT UN SITE DE REDIFFUSION**

VERFAHREN UND AUSRÜSTUNGSTEIL ZUR ERZEUGUNG EINES URSPRÜNGLICHEN GESAMTEN DATENSTROMS UND EINES MODIFIZIERTEN GESAMTEN DATENSTROMS, DER VON EINER RUNDFUNKSTELLE BEZIEHUNGSWEISE EINER REBROADCASTING-STELLE AUSGESTRAHLT WERDEN SOLL

METHOD AND PIECE OF EQUIPMENT FOR GENERATING AN ORIGINAL WHOLE DATA STREAM AND A MODIFIED WHOLE DATA STREAM INTENDED TO BE BROADCAST BY A BROADCASTING SITE AND A REBROADCASTING SITE, RESPECTIVELY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.02.2016 FR 1650828**
**04.02.2016 FR 1650893**

(43) Date de publication de la demande:
**12.12.2018 Bulletin 2018/50**

(73) Titulaire: **Enensys Technologies**
**35510 Cesson Sévigné (FR)**

(72) Inventeurs:
• **POULAIN, Ludovic**
**35410 Domloup (FR)**
• **CHAUVIERE, Benoît**
**35740 Pace (FR)**
• **BUI DO, Benoît**
**35700 Rennes (FR)**

(74) Mandataire: **Vidon Brevets & Stratégie**
**16B, rue de Jouanet**
**BP 90333**
**35703 Rennes Cedex 7 (FR)**

(56) Documents cités:
• **"Digital Video Broadcasting (DVB); Modulator Interface (T2-MI) for a second generation digital terrestrial television broadcasting system (DVB-T2);Draft ETSI TS 102 773", ETSI DRAFT; DRAFT ETSI TS 102 773, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. Broadcast, no. V1.4.1, 11 janvier 2016 (2016-01-11), pages 1-56, XP014274872,**

EP 3 411 968 B1

## Description

### 1. Domaine de l'invention

Le domaine de l'invention est celui de la diffusion d'informations, en particulier de la diffusion terrestre de services télévisuels, dans un réseau de diffusion comprenant une tête de réseau et une pluralité de sites de diffusion, dont au moins un site de diffusion « principal », appelé ci-après site de diffusion, et au moins un site de diffusion « secondaire », appelé ci-après site de rediffusion. On entend ici par site de diffusion ou site de rediffusion une entité comprenant au moins un modulateur et un émetteur, qui peuvent éventuellement être combinés au sein d'un même équipement.

Plus précisément, l'invention concerne une technique de génération déterministe d'un flux global, i.e. d'un flux comprenant un ou plusieurs tunnels couche physique encapsulant chacun un flux de transport, dit flux global modifié, au niveau d'un site de rediffusion, à partir d'un signal radiofréquence reçu au niveau du site de rediffusion. Un tel signal radiofréquence est généré par un site de diffusion, en modulant et diffusant sur une première fréquence F1 un flux global d'origine distribué par une tête de réseau. Le flux global modifié ainsi obtenu est destiné à être modulé et diffusé sur une deuxième fréquence F2, qui peut être identique ou distincte de la première fréquence F1.

L'invention propose ainsi une solution permettant d'étendre un réseau de diffusion en y ajoutant des sites de diffusion secondaires, tout en conservant une synchronisation entre les différents émetteurs des sites de rediffusion. Le ou les sites de diffusion peuvent former un réseau SFN (« Single Frequency Network » pour « réseau à fréquence unique ») sur la fréquence F1, ou un réseau MFN (« Multi-Frequency Network ». L'invention permet ainsi de créer, avec les sites de rediffusion, des sous-réseaux SFN sur la fréquence F2. On rappelle que les réseaux SFN sont classiquement utilisés pour améliorer la couverture du territoire / d'une zone géographique et palier à des zones d'ombre liées à des éléments perturbateurs dans la transmission (montagne, collines, vallées, grands immeubles, ...),.

L'invention s'applique notamment aux réseaux de diffusion terrestre conformes à la norme DVB-T2 (« Digital Video Broadcasting - Terrestrial » en anglais, pour «diffusion vidéo numérique terrestre») ou apparentée, ou aux normes à venir.

### 2. Art antérieur

Lors d'une diffusion numérique terrestre, l'ensemble des chaines associées à un multiplexe / une fréquence sont gérées de manière centralisée au niveau d'un équipement appelée communément tête de réseau (« head end »), afin de créer un signal unique pour tous les sites de diffusion implantés sur des sites géographiques distincts. Le chemin de distribution utilisé entre la tête de réseau et les sites de diffusion est généralement une liaison satellite, mais peut aussi être une liaison de type IP ou « micro ondes ».

La norme la plus utilisée actuellement pour diffuser la télévision numérique terrestre est la norme DVB-T. Cette norme est indépendante du format du contenu ; par exemple elle permet aussi bien de diffuser des services en définition standard que des services « Haute Définition ».

Une seconde version de la norme DVB-T, notée DVB-T2, offre plus d'efficacité en terme de diffusion, de couverture, de capacité de transport (débit) et de flexibilité.

Cette seconde version permet d'agréger au sein d'un même flux global plusieurs tunnels couche physique appelés PLP (« Physical Layer Pipe » en anglais). Chacun de ces tunnels couche physique est constitué d'un multiplexe de contenus dans un flux de transport de type MPEG-2 TS disposant de ses propres paramètres de modulation. Ces tunnels sont rassemblés au sein d'un flux global appelé flux T2-MI (« Modulator Interface » en anglais). Le flux T2-MI comprend des paquets T2-MI, tels que : des paquets de synchronisation (« T2-MI timestamp »), des paquets de signalisation (dont le paquet nommé T2-MI L1 courant qui donne des informations sur la structure du flux T2-MI), et des paquets appelés trames bandes de base (« Baseband Frame » en anglais) contenant les données des flux MPEG-2 TS des différents tunnels.

La structure de tels flux est notamment détaillée dans le document ETSI TR 102 773 « Digital Video Broadcasting (DVB) ; Modulator Interface (T2-MI) for a second generation digital terrestrial television broadcasting system (DVB-T2) ».

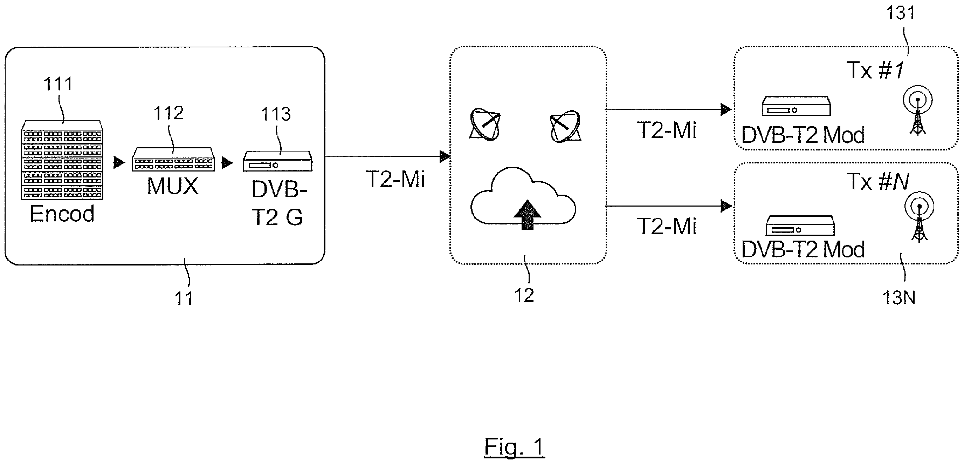

Par exemple, la figure 1 illustre un exemple de réseau de diffusion selon la norme DVB-T2. Selon cet exemple, la tête de réseau 11 comprend au moins un encodeur 111 et un multiplexeur 112, générant au moins un flux de transport de type MPEG-2 TS, et une passerelle « DVB-T2 Gateway» 113, générant un flux global d'origine, noté flux T2-MI, à partir du ou des flux de transport MPEG-2 TS. Le flux T2-MI est distribué à une pluralité de sites de diffusion 131, 13N implantés sur des sites géographiques distincts, via un réseau de distribution 12. Par exemple, les sites de diffusion 131, 13N appartiennent à une même plaque SFN. Chaque site de diffusion est équipé d'un modulateur et d'un émetteur, éventuellement combinés dans un même équipement, et génère à partir du flux T2-MI reçu un signal radiofréquence T2, qui peut être décodé par les récepteurs de télévision numérique classiques.

Dans le cadre d'une diffusion SFN, les signaux radiofréquences T2 doivent être finement synchronisés. Les signaux radiofréquences T2 émis par les émetteurs d'une même plaque SFN sont donc construits de façon identique, à partir des paquets T2-MI, et émis sous forme de trames T2.

Afin d'étendre la portée des réseaux de diffusion, il a notamment été proposé d'utiliser les sites de diffusion comme relais, permettant de transmettre les flux de transport vers des sites de rediffusion.

Toutefois, les signaux radiofréquences générés par les sites de diffusion ne portant pas l'intégralité des informations portées par le flux T2-MI, il est difficile de générer des signaux radiofréquences en sortie des sites de rediffusion qui soient finement synchronisés. En effet, les modulateurs des sites de rediffusion n'ont pas accès aux paquets T2-MI utilisés par les modulateurs des sites de diffusion pour générer un signal radiofréquence T2.

Il existe donc un besoin pour une nouvelle technique permettant à un site de rediffusion de recevoir un signal radiofréquence et de re-générer un signal radiofréquence finement synchronisé avec les signaux radiofréquences re-générés par d'autres sites de rediffusion d'un même réseau SFN.

### 3. Exposé de l'invention

L'invention propose ainsi une nouvelle solution pour la rediffusion de contenus, qui soit compatible avec la norme DVB-T2 ou d'autres normes de diffusion numérique terrestre, et qui, selon au moins un mode de réalisation, permette de garantir une rediffusion SFN.

Pour ce faire, l'invention propose un procédé de génération d'un flux global d'origine destiné à être distribué à au moins un site de diffusion, comprenant un modulateur et un émetteur émettant un signal radiofréquence sur une première fréquence, mettant en œuvre les étapes suivantes :

- obtention d'au moins un flux de transport comprenant au moins un paquet de transport,
- obtention, à partir d'au moins un paramètre de modulation dudit site de diffusion, d'au moins un instant de départ d'une trame de modulation destinée à être émise par ledit site de diffusion,
- insertion d'au moins un paquet d'information de modulation dans ledit au moins un flux de transport, à une position déterminée à partir dudit au moins un instant de départ,
- génération dudit flux global d'origine, comprenant au moins un tunnel couche physique encapsulant ledit au moins un flux de transport portant ledit au moins un paquet d'information de modulation.

Le flux global d'origine ainsi généré porte au moins un paquet d'information de modulation, par exemple un paquet d'information de modulation par flux de transport destiné à être transmis dans une trame de modulation, inséré à une position particulière dans le flux de transport. En particulier, cette position est déterminée à partir d'un instant de départ de la trame de modulation destinée à être émise par un site de diffusion, instant de départ déterminé au niveau d'une tête de réseau générant le flux global d'origine et distribuant ce flux global d'origine aux différents sites de diffusion.

Par exemple, si l'on se place dans le contexte de la norme DVB-T2, un tel flux global d'origine est de type T2-MI, comprenant au moins un tunnel couche physique de type PLP encapsulant au moins un flux TS portant au moins un paquet d'information de modulation de type T2-MIP. Une trame de modulation destinée à être émise par le site de diffusion est de type trame T2 (en anglais « T2-frame »), et l'instant de départ d'une telle trame est donné par une impulsion T2 ou TOP T2 (en anglais « T2-frame pulse »).

Dans ce contexte, un tel procédé peut être mis en œuvre au niveau de la passerelle T2-Gateway.

De tels paquets d'information de modulation, insérés à des positions particulières, pourront être utilisés pour reconstruire un flux global, dit flux global modifié, au niveau d'au moins un site de rediffusion, à partir d'un signal radiofréquence diffusé par un site de diffusion et reçu par un site de rediffusion. En particulier, une telle technique permet de reconstruire un flux global modifié de façon déterministe, ce qui permet d'assurer une rediffusion SFN au niveau des sites de rediffusion.

Selon un premier mode de réalisation, l'étape d'insertion met en œuvre, pour au moins un flux de transport, un remplacement du premier paquet de transport nul suivant ledit instant de départ par un paquet d'information de modulation.

En particulier, selon ce premier mode de réalisation, le paquet d'information de modulation porte des données de configuration, comprenant :

- une information de décalage entre ledit instant de départ et le temps associé au paquet d'information de modulation inséré dans ledit flux de transport,
- une valeur d'un compteur associé à un paquet de transport dudit flux de transport audit instant de départ, dite valeur de compteur de départ.

Par exemple, une telle information de décalage, ou « offset » en anglais, est exprimée en nombre d'octets.

Ce premier mode de réalisation repose donc sur l'ajout de données de configuration dans le ou les paquets d'information de modulation, par exemple des données privées ou des données standardisées, permettant la reconstruction du flux global modifié au niveau d'au moins un site de rediffusion. On note que ce premier mode de réalisation repose sur le remplacement d'un paquet nul d'un flux de transport par un paquet d'information de modulation, et ne modifie donc pas le débit du flux de transport.

Selon un deuxième mode de réalisation, l'étape d'insertion met en œuvre, pour au moins un flux de transport, une insertion du paquet d'information de modulation à l'instant de départ.

En particulier, l'étape d'insertion met également en œuvre une insertion d'au moins un paquet nul de façon à adapter le débit du flux de transport.

Ce deuxième mode de réalisation permet donc la génération, au niveau d'un site de diffusion, d'un signal radiofréquence formé d'au moins une trame de modulation dont le premier paquet est de type paquet d'information de modulation.

En particulier, ce deuxième mode de réalisation repose sur une adaptation du débit entre le flux de transport sans paquet d'information de modulation et le flux de transport avec paquet d'information de modulation, pour atteindre le débit maximum autorisé pour l'encapsulation du flux de transport dans un tunnel couche physique.

On note que ce deuxième mode de réalisation repose sur l'insertion des paquets d'information de modulation à des positions particulières, sans nécessiter l'ajout d'informations de configuration dans les paquets d'information de modulation.

Dans un autre mode de réalisation, l'invention concerne un équipement de génération d'un flux global d'origine correspondant, ledit flux global d'origine étant destiné à être distribué à au moins un site de diffusion, comprenant un modulateur et un émetteur émettant un signal radiofréquence sur une première fréquence.

En particulier, un tel équipement comprend au moins un élément programmable adapté pour mettre en œuvre au moins une étape du procédé de génération d'un flux global d'origine décrit précédemment, tel un processeur, un DSP, un FPGA.... Il s'agit par exemple d'une passerelle T2-Gateway d'une tête de réseau.

Un tel équipement pourra bien sûr comporter les différentes caractéristiques relatives au procédé de génération d'un flux global d'origine selon l'invention, qui peuvent être combinées ou prises isolément. Ainsi, les caractéristiques et avantages de cet équipement sont les mêmes que ceux du procédé de génération d'un flux global d'origine. Par conséquent, ils ne sont pas détaillés plus amplement.

L'invention concerne par ailleurs la génération, ou reconstruction, d'un flux global modifié destiné à un modulateur et un émetteur d'au moins un site de rediffusion, mettant en œuvre les étapes suivantes :

- réception d'un signal radiofréquence comprenant au moins une trame de modulation portant au moins un flux de transport et au moins un paramètre de modulation dudit au moins un flux de transport,

  ledit au moins un flux de transport portant au moins un paquet d'information de modulation inséré à une position déterminée à partir dudit au moins un paramètre de modulation,
  ledit signal radiofréquence étant généré par un site de diffusion en modulant un flux d'origine global et en diffusant ledit flux modulé sur une première fréquence,
  ledit flux global d'origine comprenant au moins un tunnel couche physique encapsulant ledit au moins un flux de transport,

- pour au moins une desdites trames de modulation, détermination, à partir dudit au moins un paramètre de modulation, d'au moins une information de signalisation et d'un nombre de trames bandes de base affectées audit au moins un flux de transport,
- pour au moins un desdits flux de transport de ladite trame de modulation :

  - extraction dudit paquet d'information de modulation,
  - détermination, à partir dudit paquet d'information de modulation, d'un instant de départ de ladite trame de modulation, et d'au moins un paquet de synchronisation,
  - répartition des paquets de transport de ladite trame de modulation dans les trames bandes de base affectées audit flux de transport,

- génération du flux global modifié comprenant au moins un tunnel couche physique encapsulant ledit au moins un flux de transport, à partir de ladite au moins une information de signalisation, dudit au moins un paquet de synchronisation, et desdites trames bandes de base,

ledit flux global modifié étant destiné à être modulé par ledit modulateur et diffusé par ledit émetteur sur une deuxième fréquence, qui peut être identique ou distincte de la première fréquence.

Selon l'invention, le ou les paquets d'information de modulation, insérés à des positions particulières, ainsi que les paramètres de modulation, sont utilisés pour reconstruire un flux global, dit flux global modifié, au niveau d'au moins un site de rediffusion, à partir d'un signal radiofréquence diffusé par un site de diffusion et reçu par un site de rediffusion.

En particulier, un tel procédé est destiné à reconstruire un flux global modifié à partir du signal radiofréquence diffusé par un site de diffusion obtenu en modulant et en émettant le flux global d'origine généré selon le procédé de génération d'un flux global d'origine décrit ci-dessus.

On assure de cette façon la synchronisation des signaux radiofréquences diffusés par les différents sites de rediffusion recevant le même signal radiofréquence.

Par exemple, si l'on se place dans le contexte de la norme DVB-T2, les paramètres de modulation sont de type paramètres T2, et définissent par exemple un nombre de PLP dans une trame T2, un nombre de trames BB pour chaque PLP, un type de constellation pour chaque PLP, un type de codage, etc. Ces paramètres T2 sont utilisés pour construire au moins un paquet T2-MI de signalisation de type L1. Le ou les paquets T2-MIP sont utilisés pour construire au moins un paquet T2-MI de synchronisation de type T2-MI timestamp.

Le flux global modifié ainsi reconstruit est de type T2-MI, comprenant au moins un tunnel couche physique de type PLP encapsulant au moins un flux TS.

Selon un premier mode de réalisation, ledit au moins un paquet d'information de modulation portant des données de configuration comprenant :

- une information de décalage entre un instant de départ d'une trame de modulation et le temps associé au paquet d'information de modulation inséré dans ledit flux de transport,
- une valeur d'un compteur associé à un paquet de transport audit instant de départ, dite valeur de compteur de départ,

ladite étape de détermination d'un instant de départ de ladite trame de modulation détermine ledit instant de départ à partir de ladite information de décalage et du temps associé audit paquet d'information de modulation.

En particulier, après extraction des données de configuration d'un paquet d'information de modulation, l'instant de départ de la trame de modulation est déterminé en décalant la valeur du temps associé au paquet d'information de modulation d'un nombre d'octets correspondant à l'information de décalage (« offset »).

Selon ce premier mode de réalisation, le procédé comprend également une étape d'affectation de ladite valeur de compteur de départ à un paquet de transport associé audit instant de départ (pour une trame de modulation d'indice P, ISCR(P)= ISCR_t2fr(P)), et de détermination des valeurs d'un compteur associé aux paquets de transport suivants.

Par exemple, l'étape de détermination des valeurs d'un compteur associé aux paquets de transport suivants met en œuvre la formule suivante :

$$ISCR(n) = ISCR\_t2fr(P) + (ISCR\_t2fr(P)-ISCR\_t2fr(P+1))/NbPacket(P) *Ni$$

avec :

- $ISCR(n)$ la valeur du compteur associé à un paquet courant,
- P l'indice de la trame de modulation,
- $ISCR\_t2fr(P)$ la valeur du compteur associé à un paquet de transport à l'instant de départ de la trame de modulation d'indice P,
- $ISCR\_t2fr(P+1)$ une valeur d'un compteur associé à un paquet de transport à l'instant de départ de la trame de modulation d'indice P+1,
- $NbPacket(P)$ le nombre de paquets de transport entiers dans la trame de modulation d'indice P,
- Ni le nombre de paquets de transport depuis le début de la trame de modulation.

Selon un deuxième mode de réalisation, l'étape de détermination d'un instant de départ de ladite trame de modulation détermine ledit instant de départ à partir du temps associé audit paquet d'information de modulation.

En effet, un paquet d'information de modulation ne porte pas de données de configuration selon ce deuxième mode de réalisation, mais est inséré dans le flux de transport de façon à être le premier paquet d'une trame de modulation du signal radiofréquence émis par le site de diffusion.

Selon ce deuxième mode de réalisation, le procédé comprend également une étape de détermination d'une valeur d'un compteur associé audit paquet d'information de modulation, à partir d'une estampille temporelle portée par ledit paquet d'information de modulation.

Par exemple, si l'on se place dans le contexte de la norme DVB-T2, une telle estampille temporelle est de type T2_timestamp_MIP, exprimée en temps absolu. On transpose ainsi l'estampille temporelle en horloge de référence ISCR pour le flux global modifié (en anglais « Input Stream Clock Reference »).

En particulier, un tel procédé comprend une étape de détermination des valeurs d'un compteur associé aux paquets de transport suivants, à partir de la valeur du compteur associé audit paquet d'information de modulation et d'un nombre de paquet nul ajouté dans ledit flux de transport lors de la génération dudit flux global d'origine.

Cette étape de détermination tient notamment compte de l'adaptation de débit mise en œuvre côté tête de réseau entre le flux de transport sans paquet d'information de modulation et le flux de transport avec paquet(s) d'information de modulation.

Dans un autre mode de réalisation, l'invention concerne un équipement de génération (ou reconstruction) d'un flux global modifié correspondant, ledit flux global modifié étant destiné à un modulateur et un émetteur d'au moins un site de rediffusion.

En particulier, un tel équipement comprend au moins un élément programmable adapté pour mettre en œuvre au moins une étape du procédé de génération d'un flux global modifié décrit précédemment, tel un processeur, un DSP, un FPGA, .... Il s'agit par exemple d'un nouvel équipement équipant un site de rediffusion, ou intégré en entrée d'un modulateur ou en sortie d'un récepteur radiofréquence du site de rediffusion.

Un tel équipement pourra bien sûr comporter les différentes caractéristiques relatives au procédé de génération d'un flux global modifié selon l'invention, qui peuvent être combinées ou prises isolément. Ainsi, les caractéristiques et avantages de cet équipement sont les mêmes que ceux du procédé de génération d'un flux global modifié. Par conséquent, ils ne sont pas détaillés plus amplement.

Dans un mode particulier de réalisation, les différentes étapes des procédés selon l'invention sont déterminées par des instructions de programmes d'ordinateurs.

En conséquence, l'invention vise aussi à protéger un ou plusieurs programmes d'ordinateur comportant des instructions adaptées à la mise en œuvre des procédés de génération d'un flux global d'origine ou modifié tels que décrits ci-dessus lorsque ce ou ces programmes sont exécutés par un processeur, ainsi qu'au moins un support d'informations lisible par un ordinateur comportant des instructions d'au moins un programme d'ordinateur tel que mentionné ci-dessus.

## 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :

- la figure 1 illustre un exemple de réseau de diffusion selon l'art antérieur ;
- la figure 2 illustre un exemple de réseau de diffusion dans lequel l'invention peut être mise en œuvre ;
- les figures 3 et 4 présentent les principales étapes d'un procédé de génération d'un flux global d'origine, respectivement modifié, selon un mode de réalisation particulier de l'invention ;
- les figures 5A, 5B et 6 illustrent un premier mode de réalisation de l'invention ;
- les figures 7A et 7B illustrent un deuxième mode de réalisation de l'invention ;
- les figures 8 et 9 présentent la structure simplifiée d'un équipement de génération d'un flux global d'origine, respectivement modifié, selon un mode de réalisation particulier de l'invention.

## 5. Description d'un mode de réalisation de l'invention

*5.1 Principe général*

L'invention se place dans le contexte des réseaux de diffusion comprenant au moins :

- une tête de réseau destinée à générer et distribuer un flux global d'origine,
- au moins un site de diffusion destiné à émettre un signal radiofréquence construit à partir du flux global d'origine, et
- au moins un site de rediffusion destiné à générer un flux global modifié à partir du signal radiofréquence construit à partir du flux global d'origine, et à émettre un signal radiofréquence construit à partir du flux global modifié.

Le principe général de l'invention repose sur l'insertion d'au moins un paquet d'information de modulation dans au moins un flux de transport, à une position spécifique, permettant de générer un flux global d'origine au niveau de la tête de réseau, puis de reconstruire un flux global modifié au niveau d'un site de rediffusion, de façon déterministe.

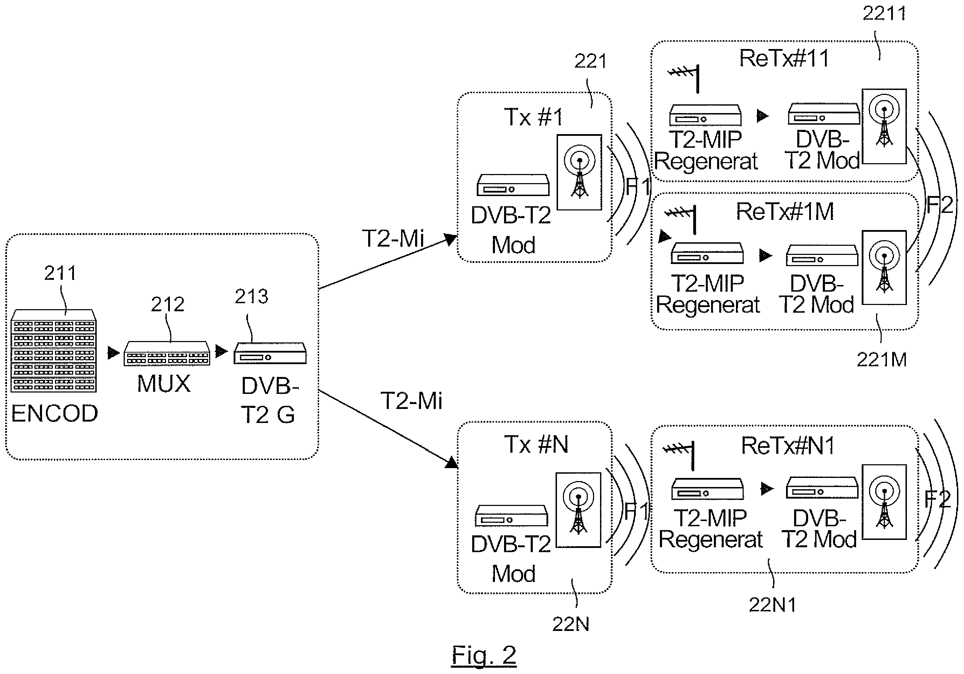

La figure 2 illustre un exemple d'un tel réseau de diffusion selon la norme DVB-T2, apte à mettre en ouvre l'invention, comprenant :

- une tête de réseau 21, comprenant au moins un encodeur 211 et un multiplexeur 212, générant au moins un flux de transport de type MPEG-2 TS, et une passerelle « DVB-T2 Gateway » 213, générant un flux global d'origine, noté flux T2-MI, à partir du ou des flux de transport MPEG-2 TS ;
- un ou plusieurs sites de diffusion 221, 22N implantés sur des sites géographiques distincts, recevant le flux T2-MI distribué par un réseau de distribution (satellite, IP, ...), et comprenant au moins un modulateur/émetteur émettant un signal radiofréquence construit à partir du flux global d'origine, par exemple en SFN sur une fréquence F1 ; et
- un ou plusieurs sites de rediffusion (2211, 221M, 22N1), formant un ou plusieurs sous-réseaux d'au moins un site de diffusion (par exemple les sites de rediffusion 2211 et 221M forment un sous-réseau du site de diffusion 221 ; le site de rediffusion 22N1 forme un sous-réseau du site de diffusion 22N). Chaque site de rediffusion comprend un équipement recevant le signal radiofréquence émis par le site de diffusion du réseau auquel il appartient, et générant de façon déterministe un flux global modifié à partir du signal radiofréquence, et comprend au moins un modulateur/émetteur émettant un signal radiofréquence construit à partir du flux global modifié, par exemple en SFN sur une fréquence F2, avec F2 éventuellement égal à F1.

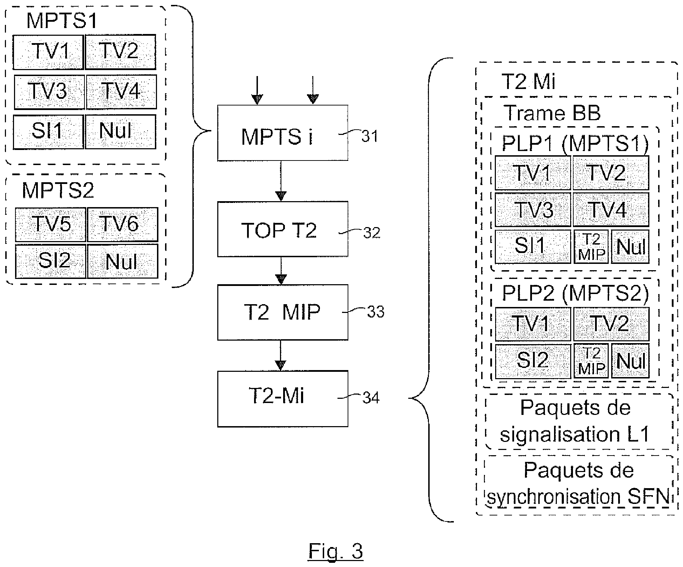

On présente, en relation avec la figure 3, les principales étapes mises en œuvre pour la génération d'un flux global d'origine, mises par exemple en œuvre au niveau de la passerelle « DVB-T2 Gateway » 213.

Au cours d'une première étape 31, l'équipement de génération d'un flux global d'origine reçoit au moins un flux de transport, par exemple au format MPTS (« Multiple Program Transport Stream » en anglais). Chaque flux de transport MPTSi (par exemple MPTS1, MPTS2) est formé d'un ensemble de paquets de transport comprenant des paquets de données (audio, vidéo, sous-titrage, ...), des paquets de signalisation (SI1, SI2), et des paquets nuls (NULL). Chaque flux de transport porte un ou plusieurs contenus (programmes télévisés TV1, ..., TV6).

Au cours d'une deuxième étape 32, l'équipement de génération d'un flux global d'origine détermine au moins un instant de départ (TOP T2) des trames de modulation destinées à être émises par les sites de diffusion (221, 22N).

Au cours d'une troisième étape 33, l'équipement de génération d'un flux global d'origine insère au moins un paquet d'information de modulation dans le ou les flux de transport, à une position déterminée à partir dudit au moins un instant de départ (TOP T2).

Finalement, au cours d'une quatrième étape 34, un flux global d'origine comprenant au moins un tunnel couche physique est généré, chaque tunnel couche physique encapsulant un flux de transport portant au moins un paquet d'information de modulation. Un tel flux global, par exemple de type T2-MI, est généré de façon classique, à partir des flux de transport modifiés (i.e. à partir des flux de transport portant au moins un paquet d'information de modulation). Un tel flux global comprend des paquets de synchronisation (« T2-MI timestamp » ou «SFN timestamp »), des paquets de signalisation (« L1 »), et des trames bandes de base (« Baseband Frame » ou « BB frames ») contenant les données des flux MPEG-2 TS des différents tunnels, y compris les paquets d'information de modulation.

Un tel flux global d'origine est ensuite distribué aux différents sites de diffusion (221, 22N). Chaque site de diffusion (221, 22N) reçoit le flux global d'origine, par exemple de type T2-MI, le module et le diffuse vers au moins un site de rediffusion, par exemple sur une fréquence F1. Le signal radiofréquence RF(F1) ainsi construit est destiné à être décodé par les récepteurs de télévision numérique classiques. De ce fait, il porte uniquement une partie des informations du flux global d'origine. En effet, certaines informations du flux global d'origine sont utilisées par le modulateur du site de diffusion pour générer le signal radiofréquence, mais ne sont pas diffusées par l'émetteur du site de diffusion. D'autres informations du flux global d'origine peuvent être transmises dans le signal radiofréquence, mais ne sont pas directement disponibles au niveau des sites de rediffusion. Par exemple, la distribution des paquets de transport dans les trames bandes de base ou les valeurs de compteur associées au flux d'origine global, de type ISCR par exemple, ne sont pas des informations directement disponibles au niveau des sites de rediffusion.

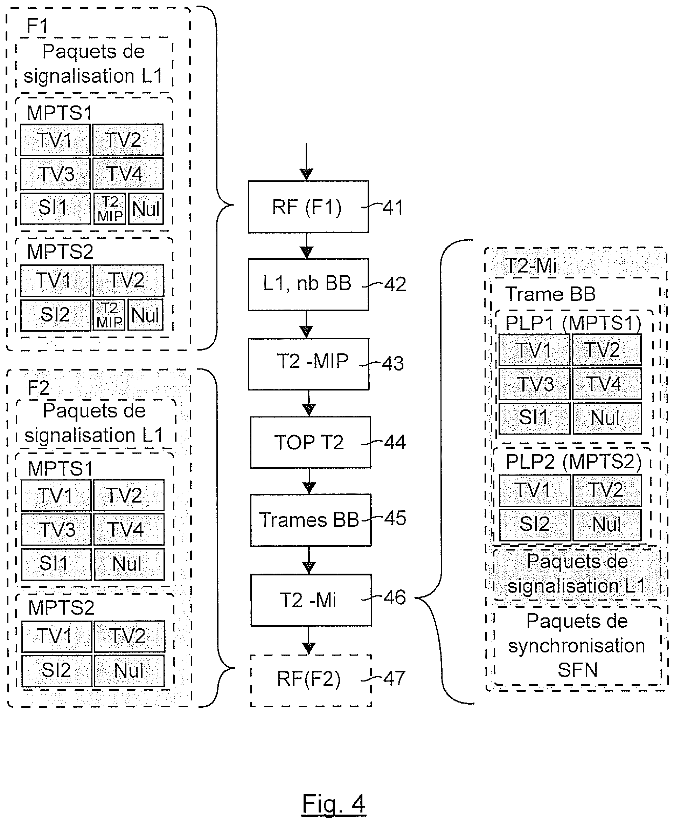

La figure 4 illustre les principales étapes mises en œuvre pour la génération d'un flux global modifié, mises en œuvre au niveau d'un site de rediffusion (2211, 221M, 22N1).

Au cours d'une première étape 41, un équipement de génération d'un flux global modifié reçoit le signal radiofréquence RF(F1). Un tel signal comprend au moins une trame de modulation portant au moins un flux de transport et au moins un paramètre de modulation du ou des flux de transport. Selon la norme DVB-T2 par exemple, un tel signal comprend au moins une trame T2 portant au moins un flux TS et des paramètres T2.

Pour au moins une trame de modulation, un tel équipement détermine au cours d'une deuxième étape 42, à partir du ou des paramètres de modulation, au moins une information de signalisation et un nombre de trames bandes de base affectées à ou aux flux de transport.

Pour au moins un flux de transport de la trame de modulation, on extrait au cours d'une troisième étape 43 le paquet d'information de modulation, et les données qu'il contient, puis on détermine au cours d'une quatrième étape 44, à partir du paquet d'information de modulation, un instant de départ de la trame de modulation, et au moins un paquet de synchronisation (« T2-MI timestamp » ou « SFN timestamp »). Enfin, on répartit au cours d'une cinquième étape 45 les paquets de transport de la trame de modulation dans les trames bandes de base, selon le nombre de trames bandes de base affectées au flux de transport.

Au cours d'une sixième étape 46, on génère un flux global modifié, comprenant au moins un tunnel couche physique encapsulant au moins un flux de transport, à partir de la ou des informations de signalisation, du ou des paquets de synchronisation, et des trames bandes de base. Un tel flux global, par exemple de type T2-MI, est généré de façon classique, à partir des flux de transport modifiés (i.e. à partir des flux de transport desquels on a retiré un paquet d'information de modulation).

Le flux global modifié ainsi obtenu est destiné à être modulé par un modulateur et diffusé par un émetteur du site de rediffusion sur une deuxième fréquence (signal RF(F2), 47), distincte ou non de la première fréquence. Un tel signal radiofréquence RF(F2) peut être décodé par les récepteurs de télévision numérique classiques.

On peut ainsi reconstruire de façon déterministe un flux global modifié au niveau de chaque site de rediffusion, permettant notamment une diffusion SFN du signal radiofréquence RF(F2) à partir des différents émetteurs des sites de rediffusion appartenant à un même sous-réseau. Par exemple les signaux radiofréquences issus des sites de rediffusion 2211 et 221M sont finement synchronisés en temps et en fréquence.

On note également que les différentes étapes décrites ci-dessus peuvent être mises en œuvre séquentiellement ou en parallèle, éventuellement dans un ordre différent de celui indiqué.

*5.2 Exemples d'implémentation*

On présente ci-après deux exemples détaillés de mise en œuvre de l'invention.

Selon ces exemples, on se place dans le contexte d'une norme de diffusion de type DVB-T2, selon laquelle le flux global d'origine et le flux global modifié sont de type T2-MI, et chaque flux de transport est encapsulé dans un tunnel couche physique PLP. Les flux T2-MI générés peuvent donc être mono-PLP ou multi-PLP.

Le paquet d'information de modulation est un paquet T2-MIP, tel que présenté dans le document ETSI TS 102 773 précité. La structure d'un tel paquet T2-MIP est notamment décrite dans la table B.1 (« *DVB-T2 Modulator Information Packet (T2-MIP)* »).

*A) Premier mode de réalisation*

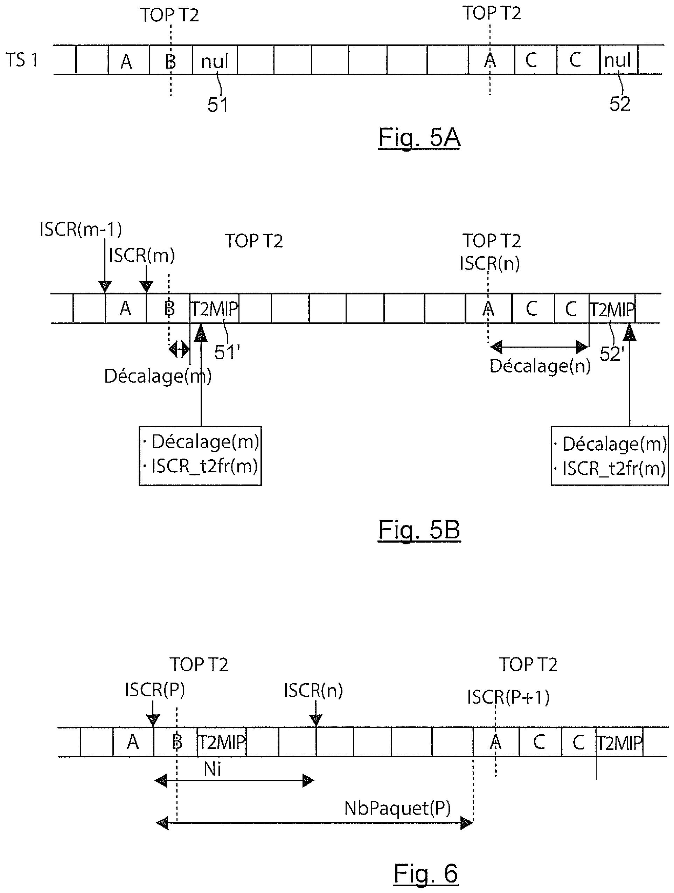

On présente, en relation avec les figures 5A et 5B, un premier exemple de réalisation, basé sur l'ajout de données de configuration (par exemple privées ou standardisées) dans le ou les paquets T2-MIP.

Selon ce premier mode de réalisation, un équipement de génération d'un flux global d'origine, par exemple de type passerelle T2, reçoit un ou plusieurs flux TS et détermine au moins un instant de départ (TOP T2, ou « T2 frame pulse ») des trames T2 destinées à être émises par les sites de diffusion, à partir d'au moins un paramètre T2 de modulation des sites de diffusion du réseau de diffusion. Le premier TOP T2 peut être déterminé aléatoirement, par exemple lors de la mise en route de l'équipement, ou bien fixé par une source externe. L'équipement peut alors déterminer les TOP T2 suivants, connaissant la longueur des trames T2 obtenue à partir des paramètres T2.

La figure 5A illustre les paquets de transport (A, B, C, null, ...) d'un flux de transport TS1 entrant, et les instants de départ pour les trames T2 qui seront générées au niveau du ou des sites de diffusion. On note que si l'on considère plusieurs flux de transport, les instants de départ pour les trames T2 seront identiques pour tous les flux de transport.

Selon ce premier mode de réalisation, on remplace un paquet nul d'un flux de transport suivant un TOP T2, par exemple le premier paquet nul suivant ce TOP T2, par un paquet T2-MIP.

Ainsi, comme illustré en figure 5B, le premier paquet nul suivant un TOP T2 (51, 52) est remplacé par un paquet T2-MIP (51', 52').

Selon ce premier mode de réalisation, on ajoute des informations de configuration au paquet T2-MIP, comprenant :

- une information de décalage « Offset » entre le TOP T2 et le début du paquet T2-MIP inséré en remplacement d'un paquet nul suivant le TOP T2, exprimée par exemple en nombre d'octets,
- une valeur d'un compteur associé à un paquet de transport du flux TS au TOP T2, dite valeur de compteur de départ « ISCR_t2fr ». En d'autres termes, on affecte au paquet T2-MIP la valeur du compteur du paquet de transport à l'instant TOP T2 : ISCR_t2fr = ISCR(m). On rappelle que le champ ISCR (en anglais « Input Stream Clock Reference ») est un compteur sur 22 bits incrémenté à chaque nouvelle période T2 élémentaire (en anglais « T2 elementary period »). En particulier, lors de la mise en trames T2 pour transmission radiofréquence du flux global, ce compteur est échantillonné et inséré dans l'entête d'une trame bande de base.

On note que selon ce premier mode de réalisation, il n'y a pas d'adaptation de débit entre le ou les flux de transport entrants et le ou les flux de transport modifiés par insertion d'un paquet T2-MIP.

Une fois le ou les paquets T2-MIP, portant les informations de configuration, insérés dans le ou les flux de transport, la passerelle T2 met en œuvre l'encapsulation T2-MI. Chaque flux de transport est encapsulé dans une ou plusieurs « BB frames » (formant un PLP portant un paquet T2-MIP). Des paquets de synchronisation « T2MI-timestamp » et de signalisation « T2MI-L1 » sont également générés, de manière classique.

La passerelle T2 délivre en sortie un flux T2-MI, dit flux global d'origine, mono-PLP si l'on considère un unique flux de transport, ou multi-PLP si l'on considère plusieurs flux de transport, distribué à un ou plusieurs sites de diffusion.

Le (ou les) site(s) de diffusion reçoive(nt) le flux T2-MI distribué par la passerelle T2, le module(nt) et l'émette(nt) sous forme radiofréquence (« over the air »), sous forme de trames T2, en mode mono ou multi-PLP.

Le (ou les) site(s) de rediffusion reçoive(nt) le signal radiofréquence émis par le (ou les) site(s) de diffusion, et regénère(nt) un flux T2-MI à partir du ou des flux de transport portés par le signal radiofréquence.

Plus précisément, un équipement de génération d'un flux global modifié, localisé au niveau d'un site de rediffusion, récupère les paramètres de modulation des flux de transport portés par le signal radiofréquence, i.e. les paramètres T2, et utilise ces informations pour régénérer au moins une information de signalisation et pour déterminer le nombre de trames bandes de base « BB frames » par trame T2 pour chaque PLP.

Selon ce premier mode de réalisation, pour au moins une trame T2 reçue et pour au moins un flux TS reçu, correspondant à un PLP, l'équipement de génération d'un flux global modifié parcourt le flux TS, identifie le paquet T2-MIP, et en extrait les données de configuration préalablement insérées.

L'équipement de génération dispose ainsi, pour ce flux TS pour cette trame T2, de l'information de décalage « Offset » entre le TOP T2 et le début du paquet T2-MIP et de la valeur de compteur de départ « ISCR_t2fr ». Il dispose également de l'estampille temporelle T2_timestamp_MIP, classiquement insérée dans le paquet T2-MIP.

A partir de l'information de décalage, l'équipement de génération peut détecter l'instant de départ de la trame T2 (TOP T2) portant ce flux TS/ ce PLP.

On note que, dans le cas multi-PLP, une trame T2 porte plusieurs paquets T2-MIP (un par PLP). Dans ce cas, l'estampille temporelle T2_timestamp_MIP est identique pour tous les paquets T2-MIP d'une même trame T2. En revanche, les données de configuration peuvent différer d'un paquet T2-MIP à un autre au sein d'une même trame T2.

Selon un premier exemple, l'équipement de génération d'un flux global modifié stocke dans une mémoire tampon toutes les données portées par une même trame T2, i.e. les paquets de transport d'un flux TS. Pour chaque trame T2, il détermine la quantité de données stockées dans la mémoire tampon, et répartit les données dans des trames bandes de base, par exemple en divisant la quantité de données pour une trame T2 courante par le nombre de trames bandes de base par trame T2 (déterminé à partir des paramètres de modulation T2). On obtient ainsi, pour chaque trame bande de base, un nombre constant de bits/octets utiles. Si nécessaire, les bits/octets restants des trames bandes de base sont complétés par des bits/octets de bourrage (« padding »).

Selon un deuxième exemple, l'équipement de génération d'un flux global modifié remplit les premières trames bandes de base avec les données portées par une trame T2, puis complète la ou les trames bandes de base restantes avec des bits/octets de bourrage.

L'équipement de génération d'un flux global modifié regénère également un compteur pour le flux global modifié, de type ISCR.

Plus précisément, ayant déterminé l'instant de départ d'une trame T2 (TOP T2) à partir de l'information de décalage portée par un paquet T2-MIP associé à un flux TS, l'équipement de génération peut affecter la valeur de compteur de départ « ISCR_t2fr » au paquet de transport à l'instant de départ d'une trame T2 (TOP T2). Pour une trame T2 d'indice P, ISCR(P) = ISCR_t2fr(P).

On peut ensuite déterminer les valeurs de compteur ISCR associées aux paquets de transport suivants dans la trame T2 d'indice P, à partir de la formule suivante :

$$ISCR(n) = ISCR\_t2fr(P) + (ISCR\_t2fr(P)-ISCR\_t2fr(P+1))/NbPacket(P) *Ni$$

avec :

- ISCR(n) la valeur du compteur associé à un paquet de transport courant,
- ISCR_t2fr(P) la valeur de compteur de départ,
- NbPacket(P) le nombre de paquets de transport entiers dans la trame de modulation d'indice P,
- Ni le nombre de paquets de transport depuis le début de la trame de modulation.

A titre d'exemple, la figure 6 illustre la re-génération du compteur ISCR, pour une trame T2 d'indice P.

Finalement, l'estampille temporelle T2_timestamp_MIP, obtenue à partir du paquet T2-MIP, est utilisée pour reconstruire au moins un paquet T2-MI de synchronisation (« T2-MI timestamp » ou « SFN timestamp »).

L'information de signalisation est également encapsulée dans un paquet T2-MI de signalisation (« L1-Current »).

L'équipement de génération met alors en œuvre l'encapsulation T2-MI, à partir du ou des paquets de synchronisation, du ou des paquets de signalisation, et des « BB frames », de façon à générer de façon déterministe un flux T2-MI, dit flux global modifié, mono-PLP ou multi-PLP.

*B) Deuxième mode de réalisation*

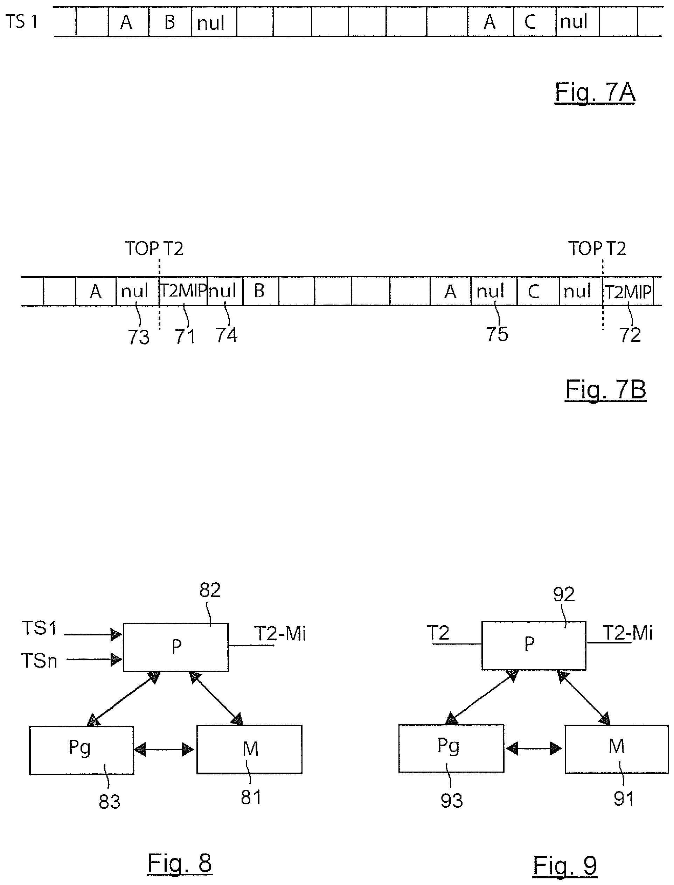

On présente désormais, en relation avec les figures 7A et 7B, un deuxième exemple de réalisation, reposant sur l'insertion de paquets T2-MIP « classiques » à des positions particulières dans les trames T2.

Selon ce deuxième mode de réalisation, un équipement de génération d'un flux global d'origine, par exemple de type passerelle T2, reçoit un ou plusieurs flux TS et détermine au moins un instant de départ (TOP T2, ou « T2 frame pulse ») des trames T2 destinées à être émises par les sites de diffusion, à partir d'au moins un paramètre T2 de modulation des sites de diffusion du réseau de diffusion.

La figure 7A illustre les paquets de transport (A, B, C, null, ...) d'un flux de transport TS1 entrant.

Selon ce deuxième mode de réalisation, on insère au moins un paquet T2-MIP dans le flux de transport, débutant aux instants de départ TOP T2 pour les trames T2 qui seront générées au niveau du ou des sites de diffusion. On insère également un ou plusieurs paquets nuls, de façon à adapter le débit des flux TS entrants. En particulier, le paquet T2-MIP peut être inséré en remplacement d'un paquet nul.

Plus précisément, la valeur de débit des flux TS entrants est modifiée pour atteindre une valeur de débit maximal de transmission pour un PLP, arrondie à une valeur inférieure de façon à transmettre un nombre entier de paquets de transport par trame T2.

Ainsi, comme illustré en figure 7B, le premier paquet suivant un TOP T2 est un paquet T2-MIP (71, 72), et des paquets nuls (73, 74, 75) sont insérés dans le flux de transport de façon à transmettre un nombre entier de paquets de transport par trame T2.

Comme les paquets T2-MIP sont insérés aux instants de départ des trames T2 qui seront générées au niveau du ou des sites de diffusion, ils permettront de délimiter les trames T2.

On note que, selon ce deuxième mode de réalisation, il n'est pas nécessaire d'ajouter des données de configuration aux paquets T2-MIP. On utilise donc selon ce mode de réalisation des paquets T2-MIP classiques, tels que définis dans la norme, mais placés à des positions spécifiques permettant de détecter le début des trames T2.

Une fois le ou les paquets T2-MIP insérés dans le ou les flux de transport, la passerelle T2 met en œuvre l'encapsulation T2-MI. Chaque flux de transport est encapsulé dans une ou plusieurs « BB frames » (formant un PLP portant un paquet T2-MIP). Des paquets de synchronisation « T2MI-timestamp » et de signalisation « T2MI-L1 » sont également générés, de manière classique. On note que, classiquement, les paquets de synchronisation «T2MI-timestamp » portent une estampille temporelle DVB-T2, noté T2-timestamp, utilisée pour synchroniser les sorties des différents modulateurs des sites de diffusion, exprimée en temps absolu ou en temps relatif. Ceci est notamment décrit dans le document ETSI TS 102 773 précité.

On considère selon ce deuxième mode de réalisation que l'estampille temporelle DVB-T2 portée par les paquets de synchronisation « T2MI-timestamp » est exprimée en temps absolu. De ce fait, un compteur *« seconds_since_2000 »* comptant le nombre de secondes depuis le 1$^{er}$ janvier 2000, 0h00 UTC, est non nul.

La passerelle T2 délivre en sortie un flux T2-MI, dit flux global d'origine, mono-PLP si l'on considère un unique flux de transport, ou multi-PLP si l'on considère plusieurs flux de transport, distribué à un ou plusieurs sites de diffusion.

Le (ou les) site(s) de diffusion reçoive(nt) le flux T2-MI distribué par la passerelle T2, le module(nt) et l'émette(nt) sous forme radiofréquence (« over the air »), sous forme de trames T2, regroupées en super-trames (en anglais « superframe »), en mode mono ou multi-PLP.

Le (ou les) site(s) de rediffusion reçoive(nt) le signal radiofréquence émis par le (ou les) site(s) de diffusion, et regénère(nt) un flux T2-MI à partir du ou des flux de transport portés par le signal radiofréquence.

Plus précisément, un équipement de génération d'un flux global modifié, localisé au niveau d'un site de rediffusion, récupère les paramètres de modulation des flux de transport portés par le signal radiofréquence, i.e. les paramètres T2, et utilise ces informations pour régénérer au moins une information de signalisation et pour déterminer le nombre de trames bandes de base « BB frames » par trame T2 pour chaque PLP.

Selon ce deuxième mode de réalisation, pour au moins une trame T2 reçue d'une super-trame et pour au moins un flux TS, correspondant à un PLP, l'équipement de génération d'un flux global modifié parcourt le flux TS et identifie le paquet T2-MIP. A partir des paquets T2-MIP, insérés aux instants de départ des trames T2 selon ce deuxième mode de réalisation, l'équipement de génération détermine les instants de départ des trames T2 (TOP T2) de la super-trame et extrait l'estampille temporelle T2_timestamp_MIP, classiquement insérée dans le paquet T2-MIP. On note que l'estampille temporelle T2_timestamp_MIP est identique pour tous les paquets T2-MIP des trames T2 d'une super-trame.

Pour chaque trame T2 d'une super-trame, il remplit les premières trames bandes de base avec les paquets de transport entrants. Si la ou les dernières trames bandes de base ne sont pas complètes, des bits/octets de bourrage sont ajoutés pour les remplir.

L'équipement de génération d'un flux global modifié regénère également un compteur pour le flux global modifié, de type ISCR.

Si l'estampille temporelle T2_timestamp_MIP est exprimée en temps absolu, comme l'estampille temporelle DVB-T2 portée par les paquets de synchronisation « T2MI-timestamp », il est possible de la transposer au format ISCR, de façon à déterminer la valeur de compteur associée au paquet T2-MIP courant, avec la formule suivante :

$$T2\_timestamp\_MIP = seconds\_since\_2000 + subseconds * Tsub$$

avec :

- seconds_since_2000 un compteur comptant le nombre de secondes depuis le 1$^{er}$ janvier 2000, 0h00 UTC ;
- subseconds un nombre d'unités de fraction de seconde ;
- Tsub une unité de fraction de seconde.

De tels champs sont notamment définis dans le document ETSI TS 102 773 précité. En particulier, selon ce document, la relation entre une période T2 élémentaire (en anglais « T2

Elementary period »), notée T, et une unité de fraction de seconde, notée Tsub, est définie comme suit :

| Largeur de bande | Champ largeur de bande (« bw ») | Période T2 élémentaire, T | unité de fraction de seconde, Tsub |
|---|---|---|---|
| 1,7MHz | $0_{16}$ | $71/131\mu s$ | $1/131\mu s$ |
| 5MHz | $1_{16}$ | $7/40\mu s$ | $1/40\mu s$ |
| 6MHz | $2_{16}$ | $7/48\mu s$ | $1/48\mu s$ |
| 7MHz | $3_{16}$ | $7/56\mu s$ | $1/56\mu s$ |
| 8MHz | $4_{16}$ | $7/64\mu s$ | $1/64\mu s$ |
| 10MHz | $5_{16}$ | $7/80\mu s$ | $1/80\mu s$ |

L'estampille T2_timestamp_MIP, exprimée en fonction de T, peut donc s'exprimer comme suit :

$$T2\_timestamp\_MIP / Tsub = seconds\_since\_2000/Tsub + subseconds$$

$$T2\_timestamp\_MIP / T = seconds\_since\_2000 / T + subseconds/7$$

De plus, comme le compteur ISCR est un compteur 22-bits basé sur une période T2 élémentaire, il est possible d'exprimer la valeur de compteur du paquet T2-MIP de la trame de modulation d'indice p dans la super-trame, notée ISCR(T2-MIP(p)), comme suit :

$$ISCR(T2\text{-}MIP(p)) = seconds\_since\_2000 / T + subseconds/7 \text{ modulo } (2\char`^22)$$

Enfin, connaissant le débit d'un flux de transport portant un paquet T2-MIP, défini comme la valeur du débit maximum d'un PLP, arrondie à une valeur inférieure de façon à avoir un nombre entier de paquets de transport dans une trame T2, et une période T2 élémentaire, il est possible de trouver le pas de comptage ISCR_step entre les paquets de transport, et de déterminer une valeur de compteur pour chaque paquet de transport :

$$ISCR(n) = ISCR(T2\text{-}MIP(p)) + Ni * ISCR\_step$$

avec Ni le nombre de paquets de transport depuis le début de la super-trame.

Finalement, l'estampille temporelle T2_timestamp_MIP, obtenue à partir du paquet T2-MIP, est utilisée pour reconstruire au moins un paquet T2-MI de synchronisation (« T2-MI timestamp » ou « SFN timestamp »).

L'information de signalisation est également encapsulée dans un paquet T2-MI de signalisation (« L1-Current »).

L'équipement de génération met alors en œuvre l'encapsulation T2-MI, à partir du ou des paquets de synchronisation, du ou des paquets de signalisation, et des « BB frames », de façon à générer de façon déterministe un flux T2-MI, dit flux global modifié, mono-PLP ou multi-PLP.

En variante de ce deuxième mode de réalisation, l'estampille temporelle DVB-T2 portée par les paquets de synchronisation « T2MI-timestamp » pourrait être exprimée en temps relatif. Dans ce cas, les paquets T2-MIP insérés dans les flux de transport pourraient porter des données de configuration, comprenant notamment une valeur d'un compteur associé à un paquet de transport du flux de transport à l'instant de départ, dite valeur de compteur de départ.

*5.3 Dispositifs*

On présente finalement, en relation avec la figure 8, respectivement la figure 9, la structure simplifiée d'un équipement mettant en œuvre une technique de génération d'un flux global d'origine, respectivement d'un flux global modifié, selon un mode de réalisation de l'invention.

Comme illustré en figure 8, un équipement de génération d'un flux global d'origine (par exemple une passerelle T2), comprend une mémoire 81 (comprenant par exemple une mémoire tampon) et une unité de traitement 82 (équipée par exemple d'au moins un processeur, FPGA, ou DSP), pilotée ou pré-programmée par une application ou un programme d'ordinateur 83 mettant en œuvre le procédé de génération d'un flux global d'origine selon un mode de réalisation de l'invention.

A l'initialisation, les instructions de code du programme d'ordinateur 83 sont par exemple chargées dans une mémoire RAM avant d'être exécutées par l'unité de traitement 82. L'unité de traitement 82 reçoit en entrée au moins un flux de transport (TS1, TSn). L'unité de traitement 82 met en œuvre les étapes du procédé de génération décrit précédemment, selon les instructions du programme d'ordinateur 83, pour générer un flux global d'origine (T2-MI).

La figure 9 illustre un équipement de génération d'un flux global modifié, comprenant une mémoire 91 (comprenant par exemple une mémoire tampon), une unité de traitement 92 (équipée par exemple d'au moins un processeur, FPGA, ou DSP), pilotée ou pré-programmée par une application ou un programme d'ordinateur 93 mettant en œuvre le procédé de génération d'un flux global modifié selon un mode de réalisation de l'invention.

A l'initialisation, les instructions de code du programme d'ordinateur 93 sont par exemple chargées dans une mémoire RAM avant d'être exécutées par l'unité de traitement 92. L'unité de traitement 92 reçoit en entrée au moins un signal radiofréquence portant au moins un flux de transport (T2). L'unité de traitement 92 met en œuvre les étapes du procédé de génération décrit précédemment, selon les instructions du programme d'ordinateur 93, pour générer un flux global modifié (T2-MI).

## Revendications

1. Procédé de génération d'un flux global d'origine destiné à être distribué à au moins un site de diffusion comprenant un modulateur et un émetteur émettant un signal radiofréquence sur une première fréquence,
   **caractérisé en ce qu'**il met en œuvre les étapes suivantes :

   - obtention (31) d'au moins un flux de transport comprenant au moins un paquet de transport,
   - obtention (32), à partir d'au moins un paramètre de modulation dudit site de diffusion, d'au moins un instant de départ d'une trame de modulation destinée à être émise par ledit site de diffusion,
   - insertion (33) d'au moins un paquet d'information de modulation dans ledit au moins un flux de transport, à une position déterminée à partir dudit au moins un instant de départ,
   - génération (34) dudit flux global d'origine, comprenant au moins un tunnel couche physique encapsulant ledit au moins un flux de transport portant ledit au moins un paquet d'information de modulation.

2. Procédé de génération selon la revendication 1, **caractérisé en ce que** ladite étape d'insertion (33) met en œuvre, pour au moins un desdits flux de transport, un remplacement du premier paquet de transport nul suivant ledit instant de départ par ledit paquet d'information de modulation.

3. Procédé de génération selon la revendication 2, **caractérisé en ce que** ledit paquet d'information de modulation porte des données de configuration, comprenant :

   - une information de décalage entre ledit instant de départ et le temps associé au paquet d'information de modulation inséré dans ledit flux de transport,
   - une valeur d'un compteur associé à un paquet de transport dudit flux de transport audit instant de départ, dite valeur de compteur de départ.

4. Procédé de génération selon la revendication 1, **caractérisé en ce que** ladite étape d'insertion (33) met en œuvre, pour au moins un desdits flux de transport, une insertion dudit paquet d'information de modulation audit instant de départ.

**5.** Procédé de génération selon la revendication 4, **caractérisé en ce que** ladite étape d'insertion met également en œuvre une insertion d'au moins un paquet nul, de façon à adapter le débit du flux de transport.

**6.** Procédé de génération selon l'une quelconque des revendications 1 à 5, **caractérisé en ce que** ledit flux global d'origine est de type T2-MI et ledit au moins un paquet d'information de modulation est de type T2-MIP.

**7.** Procédé de génération d'un flux global modifié destiné à un modulateur et un émetteur d'au moins un site de rediffusion,
**caractérisé en ce qu'**il met en œuvre les étapes suivantes :

- réception (41) d'un signal radiofréquence comprenant au moins une trame de modulation portant au moins un flux de transport et au moins un paramètre de modulation dudit au moins un flux de transport,

ledit au moins un flux de transport portant au moins un paquet d'information de modulation inséré à une position déterminée à partir dudit au moins un paramètre de modulation,
ledit signal radiofréquence étant généré par un site de diffusion en modulant un flux d'origine global et en diffusant ledit flux modulé sur une première fréquence,
ledit flux global d'origine comprenant au moins un tunnel couche physique encapsulant ledit au moins un flux de transport,

- pour au moins une desdites trames de modulation, détermination (42), à partir dudit au moins un paramètre de modulation, d'au moins une information de signalisation et d'un nombre de trames bandes de base affectées audit au moins un flux de transport,
- pour au moins un desdits flux de transport de ladite trame de modulation :

  ▪ extraction (43) dudit paquet d'information de modulation,
  ▪ détermination (44), à partir de la position dudit paquet d'information de modulation, d'un instant de départ de ladite trame de modulation, et
  ▪ reconstruction, à partir d'une estampille temporelle portée par ledit paquet d'information de modulation, d'au moins un paquet de synchronisation,
  ▪ répartition (45) des paquets de transport de ladite trame de modulation dans les trames bandes de base affectées audit flux de transport,

- génération (46) dudit flux global modifié comprenant au moins un tunnel couche physique encapsulant ledit au moins un flux de transport, à partir de ladite au moins une information de signalisation, dudit au moins un paquet de synchronisation, et desdites trames bandes de base,

ledit flux global modifié étant destiné à être modulé par ledit modulateur et diffusé par ledit émetteur sur une deuxième fréquence.

**8.** Procédé de génération d'un flux global modifié selon la revendication 7, **caractérisé en ce que**, ledit au moins un paquet d'information de modulation portant des données de configuration comprenant :

- une information de décalage entre un instant de départ d'une trame de modulation et le temps associé au paquet d'information de modulation inséré dans ledit flux de transport,
- une valeur d'un compteur associé à un paquet de transport audit instant de départ, dite valeur de compteur de départ,

ladite étape de détermination (44) d'un instant de départ de ladite trame de modulation détermine ledit instant de départ à partir de ladite information de décalage et du temps associé audit paquet d'information de modulation.

**9.** Procédé de génération d'un flux global modifié selon la revendication 8, **caractérisé en ce qu'**il comprend une étape d'affectation de ladite valeur de compteur de départ (ISCR_t2fr(P)) à un paquet de transport associé audit instant de départ, et de détermination des valeurs d'un compteur associé aux paquets de transport suivants.

**10.** Procédé de génération d'un flux global modifié selon la revendication 9, **caractérisé en ce que** ladite étape de détermination des valeurs d'un compteur associé aux paquets de transport suivants met en œuvre la formule suivante :

$$ISCR(n) = ISCR\_t2fr(P) + (ISCR\_t2fr(P)-ISCR\_t2fr(P+1))/NbPacket(P) *Ni$$

avec:

- ISCR(n) la valeur du compteur associé à un paquet de transport courant,
- P l'indice de la trame de modulation,
- ISCR_t2fr(P) ladite valeur du compteur associé à un paquet de transport à l'instant de départ de la trame de modulation d'indice P,
- ISCR_t2fr(P+1) une valeur d'un compteur associé à un paquet de transport à l'instant de départ de la trame de modulation d'indice P+1,
- NbPacket(P) le nombre de paquets de transport entiers dans la trame de modulation d'indice P,
- Ni le nombre de paquets de transport depuis le début de la trame de modulation.

**11.** Procédé de génération d'un flux global modifié selon la revendication 7, **caractérisé en ce que** ladite étape de détermination d'un instant de départ de ladite trame de modulation détermine ledit instant de départ à partir du temps associé audit paquet d'information de modulation.

**12.** Procédé de génération d'un flux global modifié selon la revendication 11, **caractérisé en ce qu'**il comprend une étape de détermination d'une valeur d'un compteur associé audit paquet d'information de modulation, à partir de ladite estampille temporelle portée par ledit paquet d'information de modulation.

**13.** Procédé de génération d'un flux global modifié selon la revendication 12, **caractérisé en ce qu'**il comprend une étape de détermination des valeurs d'un compteur associé aux paquets de transport suivants, à partir de la valeur du compteur associé audit paquet d'information de modulation et d'un nombre de paquet nul ajouté dans ledit flux de transport lors de la génération dudit flux global d'origine.

**14.** Equipement de génération d'un flux global d'origine destiné à être distribué à au moins un site de diffusion comprenant un modulateur et un émetteur émettant un signal radiofréquence sur une première fréquence, **caractérisé en ce qu'**il comprend :

- des moyens d'obtention d'au moins un flux de transport comprenant au moins un paquet de transport,
- des moyens d'obtention, à partir d'au moins un paramètre de modulation dudit site de diffusion, d'au moins un instant de départ d'une trame de modulation destinée à être émise par ledit site de diffusion,
- des moyens d'insertion d'au moins un paquet d'information de modulation dans ledit au moins un flux de transport, à une position déterminée à partir dudit au moins un instant de départ,
- des moyens de génération dudit flux global d'origine, comprenant au moins un tunnel couche physique encapsulant ledit au moins un flux de transport portant ledit au moins un paquet d'information de modulation.

**15.** Equipement de génération d'un flux global modifié destiné à un modulateur et un émetteur d'au moins un site de rediffusion, **caractérisé en ce qu'**il comprend :

- des moyens de réception d'un signal radiofréquence comprenant au moins une trame de modulation portant au moins un flux de transport et au moins un paramètre de modulation dudit au moins un flux de transport,

ledit au moins un flux de transport portant au moins un paquet d'information de modulation inséré à une position déterminée à partir dudit au moins un paramètre de modulation,
ledit signal radiofréquence étant généré par un site de diffusion en modulant un flux d'origine global et en diffusant ledit flux modulé sur une première fréquence,
ledit flux global d'origine comprenant au moins un tunnel couche physique encapsulant ledit au moins un flux de transport,

- pour au moins une desdites trames de modulation, des moyens de détermination, à partir dudit au moins un paramètre de modulation, d'au moins une information de signalisation et d'un nombre de trames bandes de base affectées audit au moins un flux de transport,
- pour au moins un desdits flux de transport de ladite trame de modulation :

  ■ des moyens d'extraction dudit paquet d'information de modulation,
  ■ des moyens de détermination d'un instant de départ de ladite trame de modulation, à partir de la position dudit paquet d'information de modulation,
  ■ des moyens de reconstruction d'au moins un paquet de synchronisation, à partir d'une estampille temporelle portée par ledit paquet d'information de modulation,
  ■ des moyens de répartition des paquets de transport de ladite trame de modulation dans les trames bandes de base affectées audit flux de transport,

- des moyens de génération dudit flux global modifié comprenant au moins un tunnel couche physique encapsulant ledit au moins un flux de transport, à partir de ladite au moins une information de signalisation, dudit au moins un paquet de synchronisation, et desdites trames bandes de base,

ledit flux global modifié étant destiné à être modulé par ledit modulateur et diffusé par ledit émetteur sur une deuxième fréquence.

16. Programme d'ordinateur comportant des instructions pour la mise en œuvre d'un procédé selon l'une quelconque des revendications 1 à 13 lorsque ce programme est exécuté par un processeur.


**Patentansprüche**

1. Verfahren zum Erzeugen eines ursprünglichen gesamten Datenstroms, der dazu bestimmt ist, in mindestens einer Ausstrahlungsstelle verteilt zu werden, die einen Modulator und einen Sender umfasst, der ein Funkfrequenzsignal auf einer ersten Frequenz sendet,
**dadurch gekennzeichnet, dass** es die folgenden Schritte umsetzt:

   - Erhalten (31) von mindestens einem Transportstrom, der mindestens ein Transportpaket umfasst,
   - Erhalten (32), ausgehend von mindestens einem Modulationsparameter der Ausstrahlungsstelle, mindestens eines Startzeitpunktes für einen Modulationsrahmen, der dazu bestimmt ist, von der Ausstrahlungsstelle gesendet zu werden,
   - Einführen (33) mindestens eines Modulationsinformationspakets in den mindestens einen Transportstrom in einer ausgehend von dem mindestens einen Startzeitpunkt bestimmten Position,
   - Erzeugen (34) des ursprünglichen gesamten Datenstroms, der mindestens eine Physical Layer Pipe umfasst, die den mindestens einen Transportstrom, der das mindestens eine Modulationsinformationspaket trägt, einkapselt.

2. Verfahren zum Erzeugen nach Anspruch 1, **dadurch gekennzeichnet, dass** der Schritt des Einführens (33) für mindestens einen der Transportströme einen Ersatz des ersten Null-Transportpakets, das dem Startzeitpunkt folgt, durch das Modulationsinformationspaket umsetzt.

3. Verfahren zum Erzeugen nach Anspruch 2, **dadurch gekennzeichnet, dass** das Modulationsinformationspaket Konfigurationsdaten trägt, die Folgendes umfassen:

   - eine Versatzinformation zwischen dem Startzeitpunkt und der dem Modulationsinformationspaket, das in den Transportstrom eingeführt wird, zugeordneten Zeit,
   - einen Wert eines Zählers der einem Transportpaket des Transportstroms zum Startzeitpunkt zugeordnet ist, der Startzählerwert genannt wird.

4. Verfahren zum Erzeugen nach Anspruch 1, **dadurch gekennzeichnet, dass** der Schritt des Einführens (33) für mindestens einen der Transportströme eine Einführung des Modulationsinformationspakets zum Startzeitpunkt umsetzt.

5. Verfahren zum Erzeugen nach Anspruch 4, **dadurch gekennzeichnet, dass** der Schritt des Einführens auch eine Einführung mindestens eines Null-Pakets umsetzt, um die Durchflussmenge des Transportstroms anzupassen.

6. Verfahren zum Erzeugen nach einem der Ansprüche 1 bis 5, **dadurch gekennzeichnet, dass** der ursprüngliche gesamte Datenstrom vom Typ T2-MI ist und das mindestens eine Modulationsinformationspaket vom Typ T2-MIP ist.

7. Verfahren zum Erzeugen eines modifizierten gesamten Datenstroms, der für einen Modulator und einen Sender mindestens einer Wiederausstrahlungsstelle bestimmt ist,
**dadurch gekennzeichnet, dass** es die folgenden Schritte umsetzt:

- Empfangen (41) eines Funkfrequenzsignals, das mindestens einen Modulationsrahmen umfasst, der mindestens einen Transportstrom und mindestens einen Modulationsparameter des mindestens einen Transportstroms trägt,

wobei der mindestens eine Transportstrom mindestens ein Modulationsinformationspaket trägt, das in einer Position eingeführt ist, die ausgehend von dem mindestens einen Modulationsparameter bestimmt wird, wobei das Funkfrequenzsignal durch eine Ausstrahlungsstelle durch Modulieren eines ursprünglichen gesamten Datenstroms und durch Ausstrahlen des modulierten Datenstroms auf einer ersten Frequenz erzeugt wird,
wobei der ursprüngliche gesamte Datenstrom mindestens eine Physical Layer Pipe umfasst, die den mindestens einen Transportstrom einkapselt,

- für mindestens einen der Modulationsrahmen Bestimmen (42), ausgehend von dem mindestens einen Modulationsparameter, mindestens einer Signalisierungsinformation und einer Anzahl von Basisbandrahmen, die dem mindestens einen Transportstrom zugewiesen sind,
- für mindestens einen der Transportströme des Modulationsrahmens:

• Extrahieren (43) des Modulationsinformationspakets,
• Bestimmen (44) aus der Position des Modulationsinformationspakets eines Startzeitpunktes des Modulationsrahmens, und
• Wiederherstellen aus einem Zeitstempel, der von dem Modulationsinformationspaket getragen wird, mindestens eines Synchronisationspakets,
• Verteilen (45) der Transportpakete des Modulationsrahmens in den Basisbandrahmen, die dem Transportstrom zugewiesen sind,

- Erzeugen (46) des modifizierten gesamten Datenstroms, der mindestens eine Physical Layer Pipe umfasst, die den mindestens einen Transportstrom einkapselt, aus der mindestens einen Signalisierungsinformation, dem mindestens einen Synchronisierungspaket und den Basisbandrahmen,

wobei der modifizierte gesamte Datenstrom dazu bestimmt ist, durch den Modulator moduliert zu werden, und durch den Sender auf einer zweiten Frequenz ausgestrahlt zu werden.

8. Verfahren zum Erzeugen eines modifizierten gesamten Datenstroms nach Anspruch 7, **dadurch gekennzeichnet, dass** das mindestens eine Modulationsinformationspaket, das die Konfigurationsdaten trägt, Folgendes umfasst:

- eine Versatzinformation zwischen einem Startzeitpunkt eines Modulationsrahmens und der dem Modulationsinformationspaket, das in den Transportstrom eingeführt wird, zugeordneten Zeit,
- einen Wert eines Zählers der einem Transportpaket zum Startzeitpunkt zugeordnet ist, der Startzählerwert genannt wird,

wobei der Schritt des Bestimmens (44) eines Startzeitpunkts des Modulationsrahmens den Startzeitpunkt aus der Versatzinformation und der Zeit, die dem Modulationsinformationspaket zugeordnet ist, bestimmt.

9. Verfahren zum Erzeugen eines modifizierten gesamten Datenstroms nach Anspruch 8, **dadurch gekennzeichnet, dass** es einen Schritt des Zuweisens des Startzählerwertes (ISCR_t2fr(P)) zu einem Transportpaket, das dem Startzeitpunkt zugeordnet ist, und des Bestimmens der Werte eines Zählers umfasst, der den folgenden Transportpaketen zugeordnet ist.

10. Verfahren zum Erzeugen eines modifizierten gesamten Datenstroms nach Anspruch 9, **dadurch gekennzeichnet, dass** der Schritt des Bestimmens der Werte eines Zählers , der den folgenden Transportpaketen zugeordnet ist, die folgende Formel umsetzt:

$$ISCR(n) = ISCR\_t2fr(P) + (ISCR\_t2fr(P) - ISCR\_t2fr(P+1))/NbPacket(P)*Ni$$

mit:

- ISCR(n) als Wert des Zählers, der einem laufenden Transportpaket zugeordnet ist,
- P als Index des Modulationsrahmens,
- ISCR_t2fr(P) als Wert des Zählers, der einem Transportpaket zum Startzeitpunkt des Modulationsrahmens mit dem Index P zugeordnet ist,
- ISCR_t2fr(P+1) als Wert eines Zählers, der einem Transportpaket zum Startzeitpunkt des Modulationsrahmens mit dem Index P+1 zugeordnet ist,
- NbPacket(P) als Anzahl an ganzen Transportpaketen in dem Modulationsrahmen mit dem Index P,
- Ni als Anzahl an Transportpaketen seit dem Beginn des Modulationsrahmens.

11. Verfahren zum Erzeugen eines modifizierten gesamten Datenstroms nach Anspruch 7, **dadurch gekennzeichnet, dass** der Schritt des Bestimmens eines Startzeitpunkts des Modulationsrahmens den Startzeitpunkt ausgehend von der Zeit bestimmt, die dem Modulationsinformationspaket zugeordnet ist.

12. Verfahren zum Erzeugen eines modifizierten gesamten Datenstroms nach Anspruch 11, **dadurch gekennzeichnet, dass** es einen Schritt des Bestimmens eines Werts eines Zählers, der dem Modulationsinformationspaket zugeordnet ist, ausgehend von dem Zeitstempel umfasst, der von dem Modulationsinformationspaket getragen wird.

13. Verfahren zum Erzeugen eines modifizierten gesamten Datenstroms nach Anspruch 12, **dadurch gekennzeichnet, dass** es einen Schritt des Bestimmens der Werte eines Zählers, der den folgenden Transportpaketen zugeordnet ist, ausgehend von dem Wert des Zählers umfasst, der dem Modulationsinformationspaket zugeordnet ist, und einer Null-Paketanzahl, die beim Erzeugen des ursprünglichen gesamten Datenstroms in den Transportstrom hinzugefügt wird.

14. Ausrüstung zum Erzeugen eines ursprünglichen gesamten Datenstroms, der dazu bestimmt ist, in mindestens einer Ausstrahlungsstelle verteilt zu werden, die einen Modulator und einen Sender umfasst, der ein Funkfrequenzsignal auf einer ersten Frequenz sendet,
**dadurch gekennzeichnet, dass** sie umfasst:

- Mittel zum Erhalten von mindestens einem Transportstrom, der mindestens ein Transportpaket umfasst,
- Mittel zum Erhalten aus mindesten einem Modulationsparameter der Ausstrahlungsstelle mindestens eines Startzeitpunktes für einen Modulationsrahmen, der dazu bestimmt ist, durch die Ausstrahlungsstelle gesendet zu werden,
- Mittel zum Einführen mindestens eines Modulationsinformationspakets in den mindestens einen Transportstrom in einer ausgehend von dem mindestens einen Startzeitpunkt bestimmten Position,
- Mittel zum Erzeugen des ursprünglichen gesamten Datenstroms, der mindestens eine Physical Layer Pipe umfasst, die den mindestens einen Transportstrom, der das mindestens eine Modulationsinformationspaket trägt, einkapselt.

15. Ausrüstung zum Erzeugen eines modifizierten gesamten Datenstroms der für einen Modulator und einen Sender mindestens einer Wiederausstrahlungsstelle bestimmt ist,
**dadurch gekennzeichnet, dass** sie umfasst:

- Mittel zum Empfangen eines Funkfrequenzsignals, das mindestens einen Modulationsrahmen umfasst, der mindestens einen Transportstrom und mindestens einen Modulationsparameter des mindestens einen Transportstroms trägt,

wobei der mindestens eine Transportstrom mindestens ein Modulationsinformationspaket trägt, das in einer Position eingeführt ist, die ausgehend von dem mindestens einen Modulationsparameter bestimmt wird, wobei das Funkfrequenzsignal durch eine Ausstrahlungsstelle durch Modulieren eines ursprünglichen gesamten Datenstroms und durch Ausstrahlen des modulierten Datenstroms auf einer ersten Frequenz erzeugt wird,

wobei der ursprüngliche gesamte Datenstrom mindestens eine Physical Layer Pipe umfasst, die den mindestens einen Transportstrom einkapselt,

- für mindestens einen der Modulationsrahmen Mittel zum Bestimmen, ausgehend von dem mindestens einen Modulationsparameter, mindestens einer Signalisierungsinformation und einer Anzahl von Basisbandrahmen, die dem mindestens einen Transportstrom zugewiesen sind,
- für mindestens einen der Transportströme des Modulationsrahmens:

• Mittel zum Extrahieren des Modulationsinformationspakets,
• Mittel zum Bestimmen, ausgehend von der Position des Modulationsinformationspakets, eines Startezeitpunktes des Modulationsrahmens,
• Mittel zum Wiederherstellen mindestens eines Synchronisationspakets aus einem Zeitstempel, der von dem Modulationsinformationspaket getragen wird,
• Mittel zum Aufteilen der Transportpakete des Modulationsrahmens in den Basisbandrahmen, die dem Transportstrom zugewiesen sind,

- Mittel zum Erzeugen des modifizierten gesamten Datenstroms, der mindestens eine Physical Layer Pipe umfasst, die den mindestens einen Transportstrom einkapselt, aus der mindestens einen Signalisierungsinformation, dem mindestens einen Synchronisierungspaket und den Basisbandrahmen,

wobei der modifizierte gesamte Datenstrom dazu bestimmt ist, durch den Modulator moduliert zu werden, und durch den Sender auf einer zweiten Frequenz ausgestrahlt zu werden.

16. Computerprogramm, welches Anweisungen zum Umsetzen eines Verfahrens nach einem der Ansprüche 1 bis 13 beinhaltet, wenn dieses Programm durch einen Prozessor ausgeführt wird.

**Claims**

1. Method for generating an original total stream intended for being distributed to at least one broadcasting site, comprising a modulator and a transmitter sending a radiofrequency signal on a first frequency, **characterized in that** it implements the following steps:

- obtaining (31) at least one transport stream comprising at least one transport packet,
- obtaining (32), from at least one modulation parameter for said broadcasting site, at least one starting instant of a modulation frame intended for being sent by said broadcasting site,
- inserting (33) at least one modulation information packet in said at least one transport stream, at a position determined from said at least one starting instant,
- generating (34) said original total stream, comprising at least one physical layer pipe encapsulating said at least one transport stream carrying said at least one modulation information packet.

2. Method for generating according to claim 1, **characterized in that** said inserting step (33) implements, for at least one of said transport streams, a replacement of the first null transport packet following said starting instant, by said modulation information packet.

3. Method for generating according to claim 2, **characterized in that** said modulation information packet carries configuration data, comprising:

- a piece of information on offset between said starting instant and the time associated with the modulation information packet inserted into said transport stream,
- a value of a counter associated with a transport packet of said transport stream at said starting instant, called a counter starting value.

4. Method for generating according to claim 1, **characterized in that** said inserting step (33), for at least one of said transport streams, implements an insertion of said modulation information packet at said starting instant.

5. Method for generating according to claim 4, **characterized in that** said inserting step also implements an insertion of at least one null packet so as to adapt the bit rate of the transport stream.

**6.** Method for generating according to any one of the claims 1 to 5, **characterized in that** said original total stream is of a T2-MI type and said at least one modulation information packet is of a T2-MIP type.

**7.** Method for generating a modified total stream intended for a modulator and a transmitter of at least one rebroadcasting site,
**characterized in that** it implements the following steps:

- receiving (41) a radiofrequency signal comprising at least one modulation frame carrying at least one transport stream and at least one modulation parameter for said at least one transport stream,

said at least one transport stream carrying at least one modulation information packet inserted at a position determined from said at least one modulation parameter,
said radiofrequency signal being generated by a broadcasting site by modulating a total original stream and broadcasting said modulated stream on a first frequency,
said original total stream comprising at least one physical layer pipe encapsulating said at least one transport stream,

- for at least one of said modulation frames, determining (42), from said at least one modulation parameter, at least one piece of signaling information and a number of baseband frames assigned to said at least one transport stream,
- for at least one of said transport streams of said modulation frame:

  ▪ extracting (43) said modulation information packet,
  ▪ determining (44), from the position of said modulation information packet, a starting instant of said modulation frame and
  ▪ rebuilding, from a timestamp carried by said modulation information packet, at least one synchronization packet,
  ▪ distributing (45) the transport packets of said modulation frame in the baseband frames assigned to said transport stream,

- generating (46) said modified total stream comprising at least one physical layer pipe encapsulating said at least one transport stream from said at least one piece of signaling information, said at least one synchronization packet and said baseband frames,

said modified total stream being intended for modulation by said modulator and broadcast by said transmitter on a second frequency.

**8.** Method for generating a modified total stream according to claim 7, **characterized in that**, said at least one modulation information packet carrying configuration data comprising:

- a piece of information on offset between a starting instant of a modulation frame and the time associated with the modulation information packet inserted into said transport stream,
- a value of a counter associated with a transport packet at said starting instant, called a counter starting value,

said step for determining (44) a starting instant of said modulation frame determines said starting instant from said information on offset and the time associated with said modulation information packet.

**9.** Method for generating a modified total stream according to claim 8, **characterized in that** it comprises a step for assigning said counter starting value (ISCR_t2fr(P)) to a transport packet associated with said starting instant, and for determining the values of a counter associated with the following transport packets.

**10.** Method for generating a modified total stream according to claim 9, **characterized in that** said step for determining the values of a counter associated with the following transport packets implements the following formula:

$$ISCR(n) = ISCR\_t2fr(P) + (ISCR\_t2fr(P)-ISCR\_t2fr(P+1))/NbPacket(P) *Ni$$

with :

- ISCR(n) being the value of the counter associated with a current transport packet,
- P the index of the modulation frame,
- ISCR_t2fr(P) said value of the counter associated with a transport packet at the starting instant of the modulation frame indexed P,
- ISCR_t2fr(P+1) a value of a counter associated with a transport packet at the starting instant of the modulation frame indexed P+1,
- NbPacket(P) the number of entire transport packets in the modulation frame indexed P,
- Ni the number of transport packets since the start of the modulation frame.

11. Method for generating a modified total stream according to claim 7, **characterized in that** said step for determining a starting instant of said modulation frame determines said starting instant from the time associated with said modulation information packet.

12. Method for generating a modified total stream according to claim 11, **characterized in that** it comprises a step for determining a value of a counter associated with said modulation information packet from a timestamp carried by said modulation information packet.

13. Method for generating a modified total stream according to claim 12, **characterized in that** it comprises a step for determining values of a counter associated with the following transport packets, from the value of the counter associated with said modulation information packet and from a number of null packets added to said transport stream during the generation of said original total stream.

14. Equipment for generating an original total stream intended for being distributed to at least one broadcasting site comprising a modulator and a transmitter sending a radiofrequency signal at a first frequency,
   **characterized in that** it comprises:

   - means for obtaining at least one transport stream comprising at least one transport packet,
   - means for obtaining, from at least one modulation parameter for said broadcasting site, at least one starting instant of a modulation frame intended for being sent by said broadcasting site,
   - means for inserting at least one modulation information packet in said at least one transport stream, at a position determined from said at least one starting instant,
   - means for generating said original total stream, comprising at least one physical layer pipe encapsulating said at least one transport stream carrying said at least one modulation information packet.

15. Equipment for generating a modified total stream intended for a modulator and a transmitter of at least one rebroadcasting site,
   **characterized in that** it comprises:

   - means for receiving a radiofrequency signal comprising at least one modulation frame carrying at least one transport stream and at least one modulation parameter for said at least one transport stream,

      said at least one transport stream carrying at least one modulation information packet inserted at a position determined from said at least one modulation parameter,
      said radiofrequency signal being generated by a broadcasting site by modulating a total original stream and broadcasting said modulated stream on a first frequency,
      said original total stream comprising at least one physical layer pipe encapsulating said at least one transport stream,

   - for at least one of said modulation frames, means for determining, from said at least one modulation parameter, at least one piece of signaling information and a number of baseband frames assigned to said at least one transport stream,
   - for at least one of said transport streams of said modulation frame:

      ▪ means for extracting said modulation information packet,
      ▪ means for determining, from the position of said modulation information packet, a starting instant of said modulation frame
      ▪ means for rebuilding, from a timestamp carried by said modulation information packet, at least one synchronization packet,

■ means for distributing the transport packets of said modulation frame in the baseband frames assigned to said transport stream,

- means for generating said modified total stream comprising at least one physical layer pipe encapsulating said at least one transport stream from said at least one piece of signaling information, said at least one synchronization packet and said baseband frames,

said modified total stream being intended for modulation by said modulator and broadcast by said transmitter on a second frequency.

16. Computer program comprising instructions to implement a method according to any one of the claims 1 to 13, when this program is executed by a processor.

Fig. 1

EP 3 411 968 B1

<u>Fig. 2</u>

MPTS1

| TV1 | TV2 |
| TV3 | TV4 |
| SI1 | Nul |

MPTS2

| TV5 | TV6 |
| SI2 | Nul |

MPTS i — 31

↓ ↓

TOP T2 — 32

T2 MIP — 33

T2-Mi — 34

T2 Mi

Trame BB

PLP1 (MPTS1)

| TV1 | TV2 |
| TV3 | TV4 |
| SI1 | T2 MIP | Nul |

PLP2 (MPTS2)

| TV1 | TV2 |
| SI2 | T2 MIP | Nul |

Paquets de
signalisation L1

Paquets de
synchronisation SFN

Fig. 3

F1

Paquets de signalisation L1

MPTS1

| TV1 | TV2 |
| TV3 | TV4 |
| SI1 | T2 MIP | Nul |

MPTS2

| TV1 | TV2 |
| SI2 | T2 MIP | Nul |

F2

Paquets de signalisation L1

MPTS1

| TV1 | TV2 |
| TV3 | TV4 |
| SI1 | Nul |

MPTS2

| TV1 | TV2 |
| SI2 | Nul |

RF (F1) — 41

L1, nb BB — 42

T2 -MIP — 43

TOP T2 — 44

Trames BB — 45

T2 -Mi — 46

RF(F2) — 47

T2-Mi

Trame BB

PLP1 (MPTS1)

| TV1 | TV2 |
| TV3 | TV4 |
| SI1 | Nul |

PLP2 (MPTS2)

| TV1 | TV2 |
| SI2 | Nul |

Paquets de signalisation L1

Paquets de synchronisation SFN

Fig. 4

Fig. 5A

Fig. 5B

Fig. 6

| TS 1 | | | A | B | nul | | | | | | A | C | nul | | |
|------|--|--|---|---|-----|--|--|--|--|--|---|---|-----|--|--|

<u>Fig. 7A</u>

TOP T2                                              TOP T2

| | | A | nul | T2MIP | nul | B | | | | | A | nul | C | nul | T2MIP |
|--|--|---|-----|-------|-----|---|--|--|--|--|---|-----|---|-----|-------|

73   71   74                              75           72

<u>Fig. 7B</u>

<u>Fig. 8</u>

<u>Fig. 9</u>

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Digital Video Broadcasting (DVB) ; Modulator Interface (T2-MI) for a second generation digital terrestrial television broadcasting system (DVB-T2). *ETSI TR 102 773*